**Europäisches Patentamt**

**European Patent Office**

**Office européen des brevets**

(19)

(11) Numéro de publication: **0 243 225 B1**

# (12) FASCICULE DE BREVET EUROPEEN

(45) Date de publication de fascicule du brevet:
**11.12.91**

(51) Int. Cl.⁵: **A01G 7/00**, A23B 7/10,
A23B 7/08, C05D 9/02

(21) Numéro de dépôt: **87400687.7**

(22) Date de dépôt: **26.03.87**

(54) **Procédé de culture des fraises ou des framboises.**

(30) Priorité: **27.03.86 FR 8604418**

(43) Date de publication de la demande:
**28.10.87 Bulletin 87/44**

(45) Mention de la délivrance du brevet:
**11.12.91 Bulletin 91/50**

(84) Etats contractants désignés:
**BE DE FR GB**

(56) Documents cités:
**EP-A- 0 188 355**     **AU-B- 413 121**
**DE-A- 2 503 042**     **FR-A- 2 238 699**
**FR-A- 2 305 411**     **US-A- 2 929 700**

**DERWENT FILE SUPPLIER WPI (L), AN
80-64947C (37) Derwent Publ., London, GB**

**DERWENT FILE SUPPLIER WPI (L), AN
85-287834 (46), Derwent Publ., Londres, GB**

(73) Titulaire: **Cotton-Haller, Pascal
Somme-Vesle
F-51460 Courtisols(FR)**

(72) Inventeur: **Cotton-Haller, Pascal
Somme-Vesle
F-51460 Courtisols(FR)**

(74) Mandataire: **Fruchard, Guy et al
CABINET BOETTCHER 23, rue la Boétie
F-75008 Paris(FR)**

## Description

La présente invention concerne un procédé de culture des fraises ou des framboises.

Il est connu que la fraise et la framboise doivent de préférence être cultivées dans un sol légèrement acide ayant un pH eau voisin de 6, un sol calcaire devant de préférence être évité car un tel sol provoque une chlorose du fraisier ou du framboisier.

Un but de la présente invention est de proposer un procédé de culture des fraises ou des framboises permettant d'obtenir des fruits gardant une fermeté satisfaisante même après plusieurs mois de conservation.

En vue de la réalisation de ce but, on prévoit selon l'invention un procédé de culture de fraises ou de framboises selon lequel on élève les plants dans un sol aménagé pour avoir un pH eau compris entre environ 7,8 et 8,2 et on effectue un apport de fer assimilable selon une quantité équivalente à la quantité de fer apportée par au moins 1 kg/ha de chélate de fer.

Ainsi, on obtient des fruits qui, bien que d'un volume inférieur aux fruits généralement obtenus, sont particulièrement fermes et propices à une bonne conservation.

Selon une version avantageuse du procédé de culture selon l'invention, on apporte de l'azote en quantité déterminée pour que la teneur du sol en azote assimilable soit au maximum de 60 kg/ha.

Ainsi, on limite le grossissement des fruits et l'on améliore leur fermeté.

Selon un autre aspect avantageux du procédé de culture selon l'invention, on apporte de la potasse en quantité suffisante pour que la teneur du sol en potasse assimilable soit de l'ordre de 300 ppm. Ainsi, les plants disposent de ressources suffisantes pour une production satisfaisante de fruits.

D'autres caractéristiques et avantages de l'invention apparaîtront à la lecture d'un exemple de mise en oeuvre particulier non limitatif du procédé selon l'invention.

Pour la culture des fraises ou des framboises selon l'invention, le sol est amené, éventuellement, par un apport de calcaire, par exemple sous forme de chaux, à un pH eau voisin de 8 (sol calcaire). La potasse est apportée abondamment avant plantation pour obtenir une quantité de potasse assimilable dans l'eau du sol voisine de 300 ppm. La potasse est par exemple apportée sous forme de sulfate de potassium et pour un sol déjà bien pourvu, une dose d'environ 400 kg/ha est généralement suffisante pour les deux récoltes.

Un apport de fer est effectué selon une dose qui varie en fonction du pouvoir chlorosant du sol, la quantité minimale étant de l'ordre de 1 kg/ha de chélate de fer.

La variété de fraises utilisée est de préférence la Belrubi ou éventuellement d'autres variétés donnant un fruit de qualité voisine, la variété devant de préférence être choisie pour donner un fruit ferme. Pour la framboise, il existe de nombreuses variétés satsifaisantes, notamment : la Malling Exploit, la Glen Prosen, la Malling Admiral, la Meeker, la Puyallup Large, la Malling Léo.

A la reprise de la végétation au printemps, de l'azote est apporté en quantité réduite afin que la teneur en eau du sol en azote assimilable ne dépasse pas 60 kg/ha.

Durant la phase de grossissement du fruit, l'apport d'eau est limité en quantité et est de préférence limité aux périodes de sécheresse, faute de quoi les fruits seraient plus sensibles aux maladies de conservation, moins fermes et moins parfumés.

Dans le cas de la culture de fraise, le sol est recouvert de plastique noir (à la plantation ou dans les deux mois qui suivent) et/ou de paille de céréales ou de débris végétaux (vers la mi-floraison) afin de protéger les fruits de la terre projetée par les pluies et/ou de toute souillure.

Lors de la récolte, les fruits sont de préférence cueillis le matin et avec leur collerette.

Les fruits ainsi obtenus sont particulièrement fermes et conviennent en particulier à une conservation dans du vinaigre.

## Revendications

1. Procédé de culture de fraises ou de framboises en vue de leur conservation, caractérisé en ce qu'on élève les plants dans un sol aménagé pour avoir un pH eau compris entre environ 7,8 et 8,2 et en ce qu'on effectue un apport de fer assimilable selon une quantité équivalente à la quantité de fer apportée par au moins 1 kg/ha de chélate de fer.

2. Procédé selon la revendication 1 caractérisé en ce qu'on apporte de l'azote en quantité déterminée pour que la teneur du sol en azote assimilable soit au maximum de 60 kg/ha.

3. Procédé selon la revendication 1 ou la revendication 2 caractérisé en ce qu'on apporte de la potasse en quantité suffisante pour que la teneur du sol en potasse assimilable soit de l'ordre de 300 ppm.

## Claims

1. A process for cultivating strawberries or raspberries for preservation thereof characterised by growing the plants in a soil which is arranged to have a water pH-value of between about 7.8 and 8.2 and by effecting an application of assimilable iron in an amount equivalent to the amount of iron applied by at least 1 kg/ha of iron chelate.

2. A process according to claim 1 characterised by applying nitrogen in a given amount for the amount of assimilable nitrogen in the soil to be a maximum of 60 kg/ha.

3. A process according to claim 1 or claim 2 characterised by applying potash in a sufficient amount for the content of assimilable potash in the soil to be of the order of 300 ppm.

**Patentansprüche**

1. Verfahren zum Anbau von Erdbeeren oder von Himbeeren im Hinblick auf ihre Konservierung, dadurch **gekennzeichnet,** daß man die Pflanzen in einem Boden zieht, welcher so behandelt ist, daß er einen Wasser-pH-Wert zwischen ungefähr 7,8 und 8,2 hat und daß man eine Beigabe von assimilierbarem Eisen in einer Menge durchführt, die der durch wenigsten 1kg/ha Eisenchelat beigegebenen Eisenmenge äquivalent ist.

2. Verfahren nach Anspruch 1, dadurch **gekennzeichnet,** daß man Stickstoff in einer bestimmten Menge beigibt derart, daß der Gehalt des Bodens an assimilierbarem Stickstoff maximal 60 kg/ha ist.

3. Verfahren nach Anspruch 1 oder 2, dadurch **gekennzeichnet,** daß man Pottasche (Kaliumcarbonat) in einer Menge beigibt, die ausreicht, daß der Gehalt des Bodens an assimilierbarer Pottasche in der Größenordnung von 300 ppm ist.